# EUROPEAN PATENT APPLICATION

(11) **EP 1 168 264 A2**
(43) Date of publication of application: **02.01.2002**
(21) Application number: 00125185.9
(22) Date of filing: 17.11.2000
(51) Int. Cl.: G07F 19/00

(54) **Server-based electronic wallet system**

(30) Priority: 30.06.2000 GB 0016177
(71) Applicant: MOTOROLA, INC., Schaumburg, IL 60196 (US)
(72) Inventor: Steed, David Anthony William, Hertfordshire (GB); Main, Jonathan, c/o Motorola, Basingstoke, Hampshire RG21 7PL (GB); Sivadas, Madhav, South Australia, 5125 Australia (AU)
(74) Representative: Dunlop, Hugh Christopher

(57) **Abstract**

Purchases from a wireless device are facilitated by detecting, at a proxy (14), that a wireless device is attempting to access a form from a merchant server (18). The form is automatically filled at the proxy and delivered to the wireless device together with a hyperlink to a file stored on a wallet server (17). Upon receipt at the wallet server of an instruction from the wireless device, information is delivered to the merchant server to complete a transaction. Also, a wireless device (10) is provided having a browser for sending, to an Internet connected gateway, a request to access a form from a merchant server (18). Upon receipt from a proxy, the wireless device receives, stores and presents to a user a representation of the form pre-filled with data relating to the user, together with a hyperlink to a file and an indication that activation of the hyperlink will complete a transaction.

## Description

### Field of the Invention

This invention relates to wireless devices, such as WAP based cellular telephones and the like, and it relates to facilitating e-commerce services to automatically fill payment (and similar) forms for transactions made over the Internet using such devices.

### Background of the Invention

Electronic Commerce (e-commerce) transactions over the Internet involve consumers browsing product listings on merchant pages and adding items that they wish to purchase into an electronic "shopping cart". When the consumer is ready to pay for the set of purchased items, he/she is presented with a "payment page", which is a form containing details of the consumer. The details required may include: name and address of consumer, shipping address, postal address, credit card number, credit card expiry date etc. Often the number of such fields that need to be filled in range from ten to fifty, depending on the type of transaction and the items purchased.

On a conventional PC environment, the payment form displays in the Web browser and the consumer tabs through each field and fills in the appropriate value. Owing to the tedium involved in filling out such forms, a class of applications called "electronic wallet" has emerged. These applications store the user's details (such as addresses, credit card information etc.), in a single location. When the consumer encounters a payment form page, he/she simply "drags-and-drops" the icon of the wallet over the browser page. The wallet automatically fills in the form with all the relevant and appropriate information. The consumer then simply submits the form to complete the transaction.

Electronic wallets are known in PC environments, where the consumer "drags-and-drops" a wallet client icon over a payment form that he/she has received from a merchant site. The wallet client uses technologies such as OLE (object linking and embedding), DDE (dynamic data exchange) etc, to elicit information about the page and sends a request to the wallet server. The response from the wallet server is carefully inserted into the form fields, again using OLE or Active-X controls or the like. This process and technology cannot be used in cellular phones since, among other limitations, there is no simple and convenient means of performing a "drag-and-drop" or equivalent operation.

Additionally, in the cellular phone environment the process of detection of the payment page is a problem.

There is an increasing demand for wireless Internet services to be made available on handheld mobile telephones and an electronic wallet would be a great advantage in the cellular, WAP based, Internet e-commerce environment. A cellular phone user has a very limited screen display and a cumbersome keypad to enter text. It would be very difficult and time consuming for users to manually enter payment details. The PC-style wallet is not feasible because the current state-of-the-art in cellular phones does not permit dynamic download and installation of third party applications on the cellular phone and advanced "drag-and-drop" features.

Hence there is an urgent need for a method that enables the consumer to request a remote server to fill up a form on his/her behalf. The invention disclosed herein solves this problem.

### Summary of the Invention

According to a first aspect of the present invention, a method of facilitating purchases from a wireless device is provided comprising: detecting, at a proxy, that a wireless device is attempting to access a form from a merchant server, where the form requires information to be entered; automatically filling the form at the proxy; delivering the filled-in form to the wireless device together with a hyperlink to a file stored on a wallet server; and upon receipt at said wallet server of an instruction from the wireless device, delivering to the merchant server information to complete a transaction.

The step of detecting preferably comprises receiving a request from the wireless device, parsing the request and comparing it with a pre-determined list of merchant form identifiers. The pre-determined list preferably includes associated mappings between fields of merchant forms and fields of user personal details.

The step of receiving preferably comprises receiving a wireless protocol request at a wireless gateway and converting it to a HTTP request.

In accordance with a further aspect of the invention, a proxy is provided for facilitating purchases from a wireless device. The proxy comprises a memory to store a list of predetermined merchant form URLs, a parser and filter for identifying by comparison with said list an incoming attempt from a wireless device to access a form from a merchant server; a form-filling software program for filling the form at the proxy; a socket to a wireless gateway for delivering the filled-in form to the wireless device together with a hyperlink to a file stored on a wallet server and for receiving an instruction from the wireless device; and a socket to a wallet server for delivering the instruction to the wallet server to complete a transaction.

The invention further provides a data storage medium having stored thereon wallet proxy computer instructions that, when loaded onto a gateway server, cause the gateway server to operate as a proxy that: receives, parses and filters requests from wireless devices; identifies an attempt to access a form from a merchant server, where the form requires information to be entered; automatically fills the form with user data; and delivers the filled-form to a wireless device through the gateway, together with a hyperlink to a file stored on a wallet server.

In accordance with a further aspect of the invention, a method of operation of a wireless device by a user is provided. The method comprises: sending, to an Internet connected gateway, a request to access a form from a merchant server, where the form requires information to be entered; receiving from the gateway a representation of the form pre-filled by wallet software associated with the gateway with data relating to the user, together with a hyperlink to a file stored on a wallet server further associated with the wallet software; and selectively activating the hyperlink to the file to activate a transaction with the merchant server. Also, a wireless device is provided having a browser for sending, to an Internet connected gateway, a request to access a form from a merchant server, where the form requires information to be entered; characterized in that, upon receipt from a proxy, the wireless device receives, stores and presents to a user a representation of the form pre-filled with data relating to the user, together with a hyperlink to a file and an indication that activation of the hyperlink will complete a transaction.

Thus the present system, method and software facilitates filling up of forms remotely and the sending of the filled-in form back to the wireless (or other remote) device of the consumer for final submission.

### Glossary of Terms

- e-wallet: electronic wallet implemented as wallet client software
- HREF: HTML term to specify links in HTML web pages
- HTTP: HyperText Transfer Protocol
- PC: Personal Computer
- URL: Universal Resource Locator
- WAP: Wireless Application Protocol
- WML: WAP Markup Language
- WSP: wireless session protocol

### Brief Description of the Drawings

FIG. 1 is an overall block diagram of a system in accordance with the invention.
FIG. 2 is a breakdown of the elements that make up the wallet proxy 14 of FIG. 1.
FIGs. 3, 4, 5 and 6 illustrate steps in the operation of the wallet proxy of FIG. 2; and
FIG. 7 is a message flow diagram for purposes of describing the exchanges of messages between the various elements of FIG. 1

### Detailed Description of the Drawings

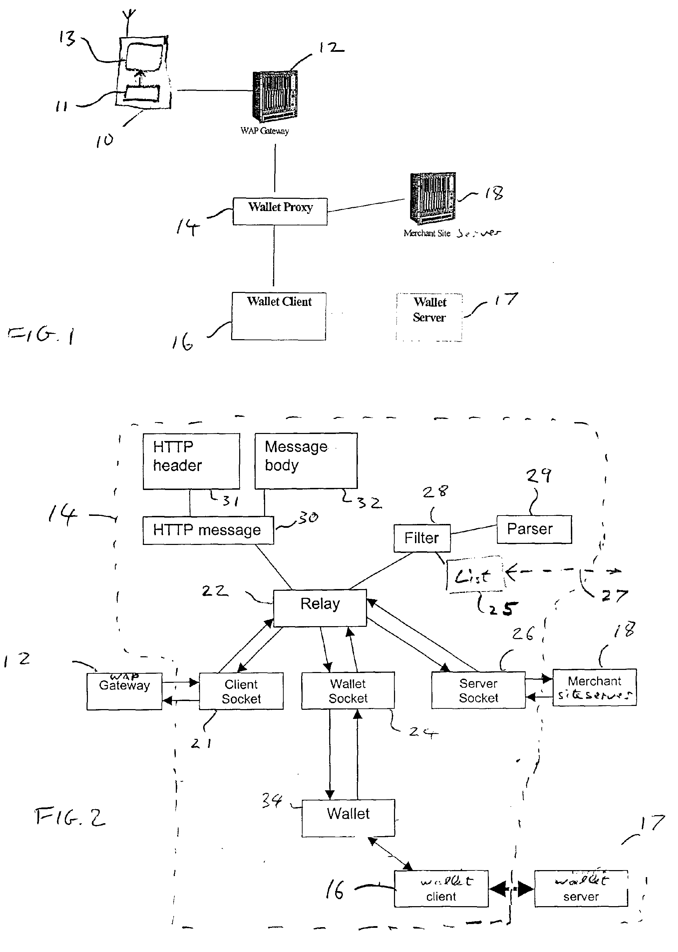

The major components of the system are shown in FIG. 1 and comprise: a cellular telephone ("mobile phone") 10 or other wireless device (personal digital assistant, etc.) capable of communicating via the Wireless Application Protocol (WAP); a WAP gateway 12; a wallet proxy 14, which is software that can run on a server connected to the WAP gateway 12 or on the same server as the WAP gateway 12; a wallet client 16, which is software that preferably runs on another server; a wallet server 17; and a merchant site 18 (i.e. a web site running on a merchant's server). The cellular telephone 10 has a memory and microprocessor on which a browser 11 is stored and run, and a display 13 which is preferably touch-sensitive so that buttons and hot links can be activated (but the cellular telephone may be implemented with alternative input and output devices).

In greater detail, and with reference to FIG. 2, the wallet proxy 14 comprises a client socket 21 coupled to the WAP gateway 12 and a relay 22 coupled to the client socket 21. The relay 22 is coupled to a wallet socket 24. The wallet socket is coupled to wallet interface software 34, which is in turn coupled to the wallet client (a form of proxy). The relay 22 is also coupled to a server socket 26 (in turn coupled to the merchant site 18). The relay 22 is capable of relaying HTTP messages 30 comprising a HTTP header 31 and a message body 32. The relay 22 includes a filter 28 and a parser 29. The filter 28 has an associated memory 25 that stores a list of merchant pay page URLs which is updated from time-to-time by a remote link 27 (which can be an Internet connection, for example, could take other forms).

In operation, a user using the browser 11 installed in the telephone 10 selects a URL. This URL is sent to the WAP gateway 12. The WAP gateway 12 converts WAP session protocol messages from the cellular telephone 10 to HTTP. The WAP gateway 12 is configured to forward all HTTP requests to the wallet proxy 14. The wallet proxy 14 compares the URL with a list of merchant pay page URLs that it serves. This list is stored locally at the wallet proxy 14 and updated from time-to-time by a remote look-up operation. If the URL is not recognized as a merchant pay page that is served by the wallet proxy software 14, the wallet proxy software 14 plays no further part and the WAP gateway performs its normal task connecting directly to the Internet (not shown).

The wallet proxy 14 acts as a normal proxy for general HTTP requests, but the wallet proxy maintains a table in memory 25 of "profiled" WML pages belonging to one or more merchants. Each profiled WML page is a WML form page with a number of field definitions (e.g. name, address, credit card number, billing address). Different merchants request such details in different formats and different sequences. For example merchant A may request credit card details before shipping address whereas merchant B may request shipping address before credit card. Merchant C may additionally demand age related information. The wallet proxy 14 profiles WML pages by storing, for each merchant page supported, a mapping of field definitions to specific values based on user date (including name, address, credit card details and shipping address). A "profiled" WML page in this context is a WML form page whose field definitions have been analyzed and mapped in this manner.

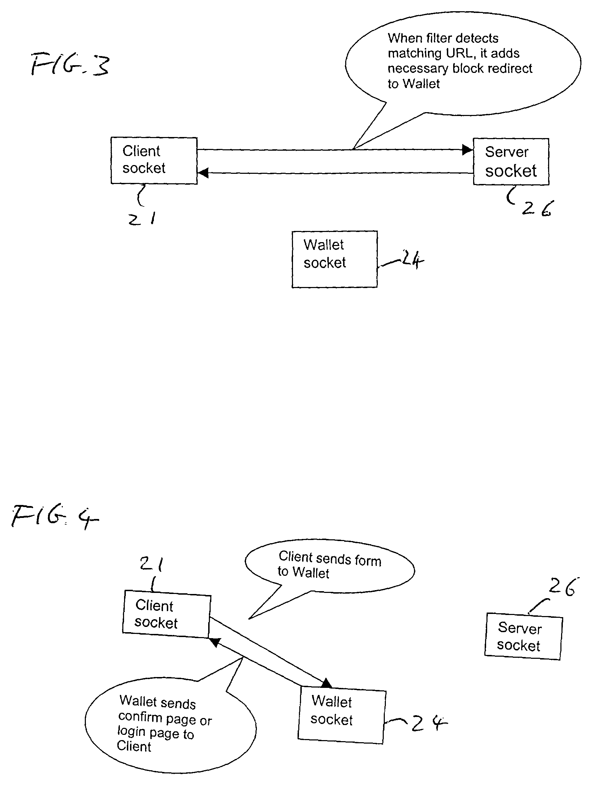

Filter 28 filters requests to "profiled" WML pages. When such request is identified (FIG. 3.), the wallet proxy 14 adds an extra WML card with a special anchor (HREF) to allow the consumer to use a server side wallet to fill up the pay page. This WML card is sent to the telephone 10 via the WAP gateway 12. The WML card has a button or URL that can be activated by the user.

When the consumer receives the WML card and selects this option (i.e activates this button or URL), the wallet proxy 14 intelligently directs the request to the wallet client 16 (FIG. 4) together with all the necessary information to authenticate the user to the wallet client 16. The wallet client 16 processes this information and places a request to the wallet server 17 to furnish appropriate values for the fields in the merchant's pay page.

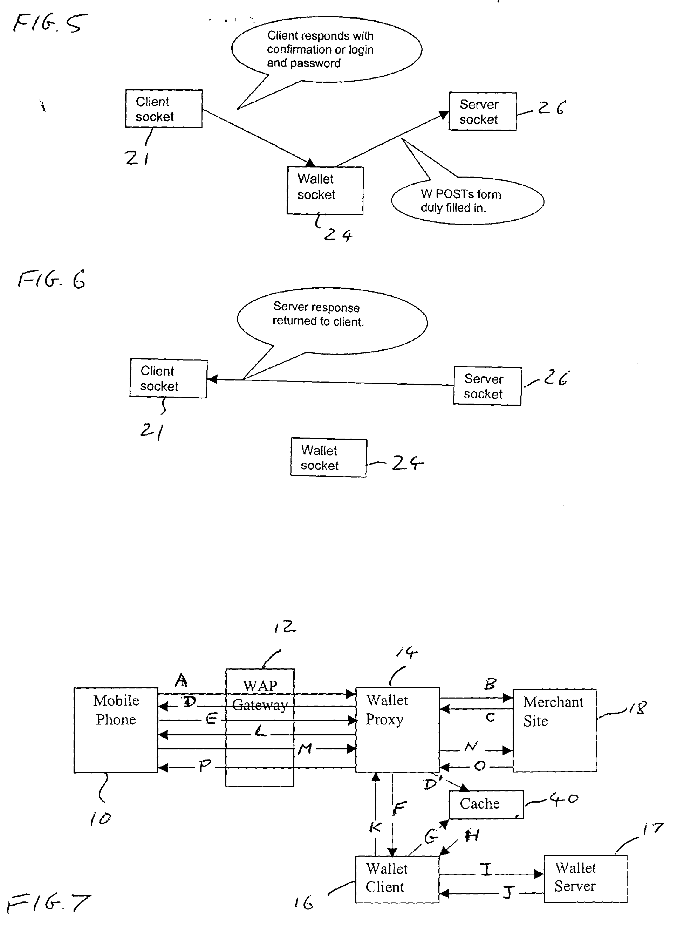

The wallet server 17 extracts the user's credit card information and the merchant's pay page profile and tries to match all the fields with the appropriate user information. If sucessful, this is returned to the wallet interface software 34, which performs the task (FIG. 5) of filling up the WML form (i.e. auto-filling the merchant's pay page with user data from the wallet client 16) and returning it to the user's mobile phone 10 (or WAP enabled mobile device). At this point the user sees the original pay page of the merchant, but with all fields filled in. The user then simply navigates through the card until he/she gets to the link to commit the order ("Make Payment" page), and then follows that link in order to complete the transaction (FIG. 6).

The set of interactions during a payment session are described in greater detail now with reference to FIG. 7.

Step A - the browser 11 in the WAP mobile 10 initiates a WSP request for a merchant's "payment form page", which is translated into an HTTP request either at or before the WAP gateway 12, and forwarded to the wallet proxy 14. (The wallet proxy 14, and wallet client 16 only understand HTTP).

Step B - the wallet proxy 14 checks if the request is for a profiled merchant's page. If it is, an "alert" field is set up in order to intercept the response. The wallet proxy 14 then forwards the request to the merchant's site 18.

Step C - the merchant site 18 responds with the "payment form page".

Steps D and D' - the wallet proxy 14 caches the response page in a cache 40. (This is used when the wallet client 16 later needs the page). The wallet proxy 14 also adds a special WML card to enable the user to choose if he/she wants to use the wallet client to make the payment or fill the form themselves. The "pay by wallet" URL contains information about the cached file.

Step E - the user selects to use the e-wallet. The mobile device forwards the request to the WAP gateway 12 and then the wallet proxy 14.

Step F - the wallet proxy 14 redirects the request to the wallet client 16.

Step G - the wallet client 16 extracts the filename of the cached WML page and requests the cache for the WML page.

Step H - the cache 40 returns the original file containing the merchant's pay page.

Step I - the wallet client 16 forwards user and merchant information to the wallet server 17.

Step J - the wallet server 17 returns with the appropriate name value pairs for making the payment.

Step K - the wallet client 16 uses this to fill in "default" values into the WML page (that it retrieved from the cache) and pushes it back to the client.

Step L - the wallet proxy 14 returns the page to the WAP device. The new "default" values for every field are displayed on display 13 within the browser 11.

Step M - the user checks if the values are correct and proceeds to commit the transaction by activating a button on the touch sensitive screen 13.

Step N - the wallet proxy 14 forwards the GET or POST to the merchant site 18.

Step O - the merchant site 18 responds with the "payment complete" page.

Step P - the "payment complete" page is returned to the WAP device 10 (mobile phone) and is preferably displayed.

In this manner the filter 28 of the wallet proxy 14 checks if a given page returned from an external Web site is a payment page of a known merchant. When it recognises such a page, it stores the page in a special location locally, and adds valid content into the page to prompt the consumer to choose if he/she desires to make the payment using the electronic wallet. The wallet proxy 14 then sends it to the consumer on the usual channel. Part of this added content is a special hyperlink URL that encodes the address of the wallet client 16 and the cache file ID of the original file returned from the merchant. If he/she chooses to pay using the electronic wallet (by following the specially inserted hyperlink), the consumer is prompted to enter a login name and password. This is done in order to authenticate the user to the wallet server 17. When the consumer chooses to send this information, a connection to the wallet client 16 is established and an appropriate request is sent. The wallet client 16 authenticates the consumer and commences the form filling process. It first obtains the original page from the wallet proxy 14 by requesting for the file with the file id given in the consumer's request. It then establishes a connection with the wallet server 17 that stores information about the consumer and the profiled merchant's pay page fields. The wallet client 16 uses the information returned by the wallet server 17 in order to insert "default value" attributes to the field tags of the form page. On completion of this task, it returns the page to the consumer. The consumer then proceeds to check if all the fields contain the correct values, and if satisfied chooses the hyperlink to complete the transaction. The request is forwarded to the merchant site for completion of the transaction.

In accordance with this technique, cookie information can be preserved and the browser and the merchant site are kept oblivious of the existence of the wallet client 16 and the wallet server 17. The key to this lies in the special hyperlink URL that is added by the wallet proxy's filter that points to the wallet client 16. In reality the URL still points to the merchant site and to the current directory (of the merchant's server) from which the page was retrieved. However, a special "alert trigger" is appended to this in the "file" and "query string" part of the URL. This trigger text is recognised by the wallet proxy 14 and all requests with such URLs are given a special treatment. An example is shown below to illustrate this.

### Example 1.

If the payment page from the merchant site had the following URL (example only):
http://merchant.com:80/wml/pay/payStep.asp?a=1;b=3;step=5
   then the wallet proxy 14 will create the special URL for initiating wallet payment as (example only):
http://merchant.com: 80/wml/pay/@@eWalletRedirect@@?http://eWallet.com:80 70/username=$(username);password=$(password);cache/file-num212345

When the browser is requested to follow such a hyperlink, it believes that it is contacting the merchant site. The request arrives at the wallet proxy 14, which detects that it is a special request and instead of contacting the merchant site (http://merchant.com:80), the wallet proxy parses the URL string and extracts the real URL, which is:
http://eWallet.com:8070/username=$(username);password=$(password);cache/fil e-num212345 and it sends a request to this address.

The completed form is sent back to the consumer as a result of this request and contains all the hyperlinks intact as sent by the merchant. The only change is the inclusion of "default values" for all the input fields. These are set to the appropriate values for the particular consumer, based on information extracted from the wallet server 17. On receiving the completed page the consumer can satisfy himself/herself that the values are valid and then submit the form to the merchant. The consumer's browser would send all the relevant cookies to the merchant because as far as the browser was concerned, the filled-in page was returned from the merchant site. In this process the merchant site was not informed of the additional processing that was performed. The consumer's browser was also kept oblivious of the existence of the wallet client 16 and wallet server 17.

Without this invention, consumers who wish to purchase items over the Internet using a cellular phone would have to manually fill-in payment details using the phone's restricted keypad and limited display. Such a handicap would severely restrict the use of cellular phones for e-commerce purposes -- and thus cause the Internet service provider to lose a significant portion of the market. The invention described and claimed provides a technique for intercepting form pages, filling the pages with relevant information, and returning the filled in forms to the user -- ready for submission to the issuing merchant. These tasks are performed without disturbing any HTTP cookies sent by the merchant and without involving the merchant's Website in the form filling process.

The above description has been given by way of example only. Numerous and varied modifications of detail can be made within the scope of the invention.

## Claims

1. A method of facilitating purchases from a wireless device comprising:
detecting, at a proxy, that a wireless device is attempting to access a form from a merchant server, where the form requires information to be entered;
automatically filling the form at the proxy;
delivering the filled-form to the wireless device together with a hyperlink to a file stored on a wallet server; and
upon receipt at said wallet server of an instruction from the wireless device, delivering to the merchant server information to complete a transaction.

2. The method of claim 1, wherein the step of detecting comprises receiving a request from the wireless device, parsing the request and comparing it with a pre-determined list of merchant form identifiers.

3. The method of claim 2, wherein the pre-determined list includes associated mappings between fields of merchant forms and fields of user personal details.

4. The method of claim 2, wherein the step of receiving comprises receiving a wireless protocol request at a wireless gateway and converting it to a HTTP request.

5. The method of claim 1, wherein, following the step of detecting, retrieving the form from the merchant server and caching it in a cache at the wallet proxy.

6. The method of claim 5 further comprising retrieving the form from the cache upon receipt of an invoke instruction to invoke the wallet proxy.

7. The method of claim 6, wherein the step of filling the form proceeds from the step of retrieving the form from the cache.

8. A proxy for facilitating purchases from a wireless device comprising:
a memory to store a list of predetermined merchant form URL's,
a parser and filter for identifying by comparison with said list an incoming attempt from a wireless device to access a form from a merchant server, where the form requires information to be entered;
a form-filling software program for filling the form at the proxy; and
a socket to a wireless gateway for delivering the filled-in form to the wireless device together with a hyperlink to a file stored on a wallet server and for receiving an instruction from the wireless device; and
a socket to a wallet server for delivering the instruction to the wallet server to complete a transaction.

9. A data storage medium having stored thereon wallet proxy computer instructions that, when loaded onto a gateway server, cause the gateway server to operate as a proxy that:
receives, parses and filters requests from wireless devices;
identifies an attempt to access a form from a merchant server, where the form requires information to be entered;
automatically fills the form with user data; and
delivers the filled-form to a wireless device through the gateway, together with a hyperlink to a file stored on a wallet server.

10. A method of operation of a wireless device by a user, the method comprising:
sending, to an Internet connected gateway, a request to access a form from a merchant server, where the form requires information to be entered;
receiving from the gateway a representation of the form pre-filled by wallet software associated with the gateway with data relating to the user, together with a hyperlink to a file stored on a wallet server further associated with the wallet software; and
selectively activating the hyperlink to the file to activate a transaction with the merchant server.

11. A wireless device having a browser for sending, to an Internet connected gateway, a request to access a form from a merchant server, where the form requires information to be entered; **characterized in that**, upon receipt from a proxy, the wireless device receives, stores and presents to a user a representation of the form pre-filled with data relating to the user, together with a hyperlink to a file and an indication that activation of the hyperlink will complete a transaction.
